# EUROPEAN PATENT APPLICATION

(11) **EP 1 533 692 A2**
(43) Date of publication of application: **25.05.2005**
(21) Application number: 04257075.4
(22) Date of filing: 15.11.2004
(51) Int. Cl.: G06F 3/12

(54) **Document processing apparatus and document processing method**

(30) Priority: 19.11.2003 JP 2003389655
(71) Applicant: CANON KABUSHIKI KAISHA, Tokyo (JP)
(72) Inventor: Yoshida, Masayuki, Ohta-ku Tokyo (JP)
(74) Representative: Legg, Cyrus James Grahame

(57) **Abstract**

A document processing system and method checks resources of a print environment during a "preflight check" and matches the resources to those needed to output contents of a document before printing the document. First, a PC environment is checked. If printer fonts are used, a printer check is performed. Next, the document is analyzed to determine resources needed to output the document. Then matching is performed between the PC and printer environments and the resources used in the document. If available fonts and color profile are not provided, or the resolution of an image included in the document varies from that of the printer, a warning (notification) is displayed to an operator, and the operator is allowed to edit the document as necessary. Accordingly, a print system, which can employ preflight check results regardless of the operator skill level is provided.

## Description

### BACKGROUND OF THE INVENTION

### Field of the Invention

The present invention relates to a document print system. More particularly, the present invention relates to a print system for receiving and outputting documents in a print environment.

### Description of the Related Art

Conventional print systems for receiving and printing input documents such as PDF (portable document format), PS (PostScript), or SVG (scalable vector graphics)-format data are well known. Usually, system resources available to print the input documents are determined during a "preflight check" before actual print processing is performed. Specifically, during the preflight check, font type, font embedding, or color profile names are determined and matched against available resources. An example of this method is disclosed in Japanese Patent Laid-Open No. 2003-036162.

However, conventional systems do have a number of disadvantages. One disadvantage is that the operator performing the flight check must possess in-depth knowledge of print system environments and input documents to be output in such environments. The operator, not the print system, must be relied upon to determine whether available system resources are sufficient to perform the job. The print system merely reads document data and presents it to the operator. The operator must know the capability of the print system, and must then match this capability to the document data to determine if print processing can be adequately performed.

### SUMMARY OF THE INVENTION

The present invention has been made in order to solve the above-described problems. During a "preflight check," the print system determines print environment resources such as the resources possessed by the printer, the settings of the printer driver constituting the print system, or the resource environment of the personal computer, and then performs matching. An advantage of the print system of the present invention is that preflight results can be evaluated and matched against print system resources regardless of operator skill level.

According to one aspect of the present invention, a document processing system is provided, which includes, a first acquisition step which acquires first resource information on resources to be used for a document; a second acquisition step which acquires second resource information on resources available for outputting the document; and a matching step which matches the first resource information with the second resource information, and outputs information on resources unavailable for outputting the document.

In the present invention, the information on resource unavailable for outputting the document may includes at least either information on resources which is included in the first resource information and not included in the second resource information, or information on resources which is included in the second resource information, but do not include attributes for outputting the document.

Also, in the present invention, the first acquisition step and the second acquisition step may acquire information on a font, a color profile, and/or an image resolution as information on resources, and the information on resources unavailable for outputting the document preferably includes information on a font, a color profile, and/or an image resolution.

Also, in the present invention, the first acquisition step may acquires, as the first resource information, information on a font to be used for outputting electronic document as resource information on a font, which is either a font possessed by a document processing system or a font possessed by a printer connected to the document processing system.

Also, the present invention may further includes an edit step for editing the document, wherein the edit step can embed resources to be used for the document in the document, or perform an operation for replacing the resources.

Also, the present invention may further includes a conversion step, which converts the document into a format for outputting from a printer.

Also, the present invention may further includes a specification module for specifying an alternative font for a font, which is unavailable for outputting the document, wherein the font is included in the resources.

Also, the present invention may further includes a display module for displaying a list of alternative fonts in an output environment, wherein the specification module specifies a font from a list of alternative fonts displayed in the display module.

Also, in the present invention, the matching module may gives a warning such that a use place of the font, which is not provided in the output environment, can be identified.

Also, the present invention may further includes a specification step for specifying an alternative font for a font, which is unavailable for outputting the document, wherein the font is included in the resources.

Also, the present invention further provides a display step for displaying a list of alternative fonts in an output environment, wherein the specification step specifies a font from the list of alternative fonts displayed in the display step.

Also, in the present invention, the matching step preferably gives a warning such that a use place of the font, which is not provided in the output environment, can be identified.

Further features and advantages of the present invention will become apparent from the following description of the preferred embodiments (with reference to the attached drawings).

### BRIEF DESCRIPTION OF THE DRAWINGS

Fig. 1 shows the architecture of a document print system according to an embodiment of the present invention.

Fig. 2 is a diagram illustrating a schematic configuration of a personal computer and a server.

Fig. 3 is a diagram illustrating a memory map of a RAM in a personal computer and a server when processing according to the present invention is executed.

Fig. 4 is a schematic configuration diagram of a printer.

Fig. 5 is a diagram illustrating a RIP (raster image processor) module configuration of the present invention.

Fig. 6 is a diagram illustrating a difference between intermediate data of two types.

Fig. 7 is a flowchart illustrating a flow of preflight check of the present invention.

Fig. 8 is a flowchart illustrating a flow of edit processing after preflight check of the present invention.

Fig. 9 is a diagram illustrating an example of a user interface displaying the result (warning information) of a preflight check.

Fig. 10 is a diagram illustrating an example of a user interface displaying the result (document information) of a preflight check.

Fig. 11 is a diagram illustrating an example of a user interface displaying the result (color information) of a preflight check.

Fig. 12 is a diagram illustrating an example of a user interface displaying the result (font information) of a preflight check.

Fig. 13 is a diagram illustrating an example of a user interface displaying the result (image information) of a preflight check.

Fig. 14 is a diagram illustrating an example of a user interface displaying the result (list display) of a preflight check.

### DETAILED DESCRIPTION OF THE EMBODIMENTS

### First Embodiment

### (Printer system configuration)

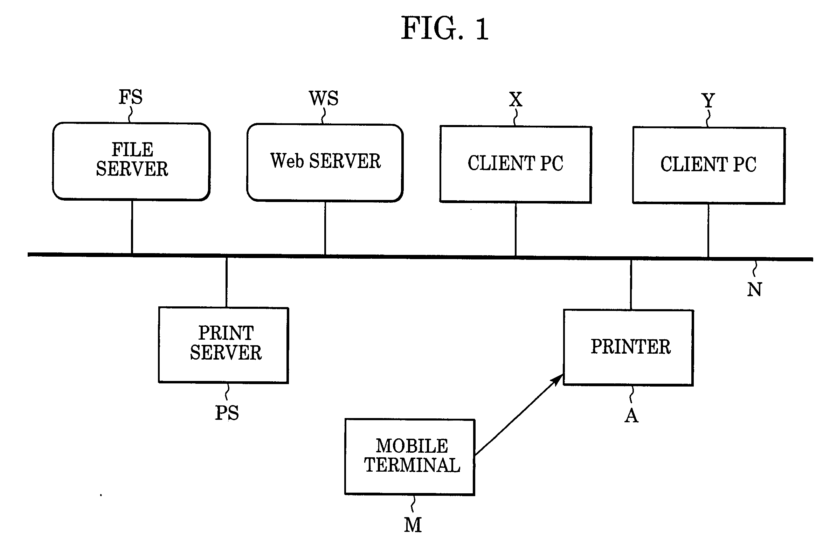

In the following, a description will be given of embodiments of the present invention with reference to the drawings. Fig. 1 is a block diagram of the architecture of a document print system according to an embodiment of the present invention. The document print system includes a file server FS, a Web server WS, client PCs (personal computers) X and Y, a printer server PS, and a printer A all of which are communicably coupled via a network N. The network N may include the Internet, and/or a wide area network coupled to a local area network. A mobile terminal M such as a personal digital assistant is communicably connected to the printer via a link such as IrDA, RS-232C, or Centronics without connecting to the network. The client personal computers X and Y may be a personal digital assistant, workstation, or include a word processor, for example. Also, the client personal computers X and Y and the file server FS store font groups according to types of fonts, Web data, image data, and the like.

In this system, the mobile terminal M or the client personal computer X or Y makes a print request and outputs the print request to the printer. The print request includes information regarding a document location such as a URL of a Web page to be printed or a location of PDF data, the number print copies to be print and so on. The Web server WS gathers necessary document data, font data, etc. from the file server FS, and transfers it to the print server PS. The print server PS expands the transferred data, and then sends the data to the printer A to print it. In this embodiment, a preflight check before executing print is performed by the print server PS. It should be noted that a preflight check might also be performed by a system if the system has a RIP (raster image processor).

### (Computer Configuration)

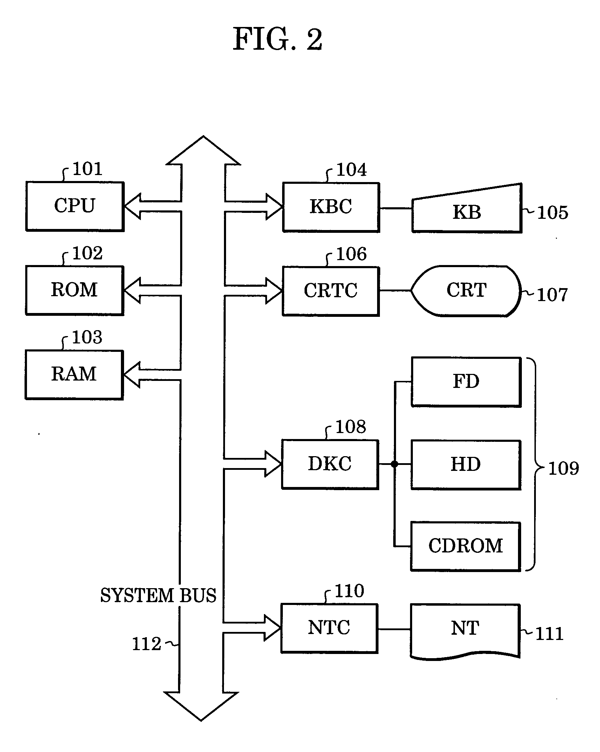

Fig. 2 is a block diagram of the typical computer subsystem configuration of the client personal computers X and Y. This layout is also applicable to each of the file server FS, the Web server WS, and the print server PS. In Fig. 2, a CPU 101 is a central processing unit, and controls the entire computer system including operation processing, etc. A ROM 102 is a read-only memory, and stores a system startup program, a basic I/O program, character-pattern data (font data) for converting a character code to a bit pattern, etc. A RAM 103 is a random-access memory, and temporarily stores data as necessary to support operations of the CPU 101. The stored data in the RAM 103 include the operation result, a character-pattern data string and graphic data converted from a character code for display, image data, programs executed by the CPU 101 and so on.

A KBC 104 is a keyboard control that receives and transmits key-input data (character codes and control codes) from the KB (keyboard) 105 to the CPU 101. A CRTC 106 is a display control part, and reads character-pattern data strings stored in the RAM 103, and transfers them to a CRT 107. The CRT 107 is a display unit, and receives character-pattern data strings, graphic data, image data from CRTC 106, and displays them onto a display screen.

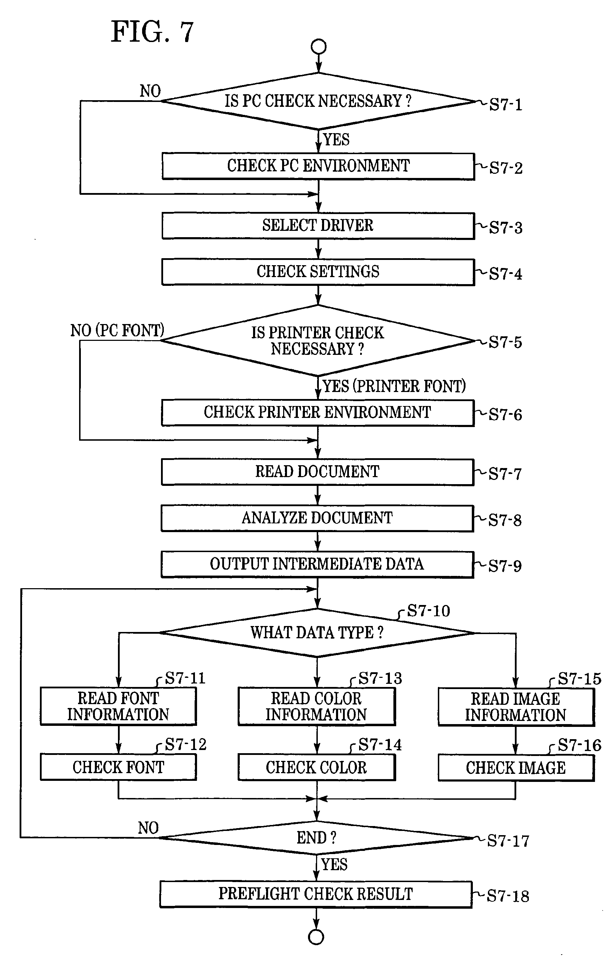

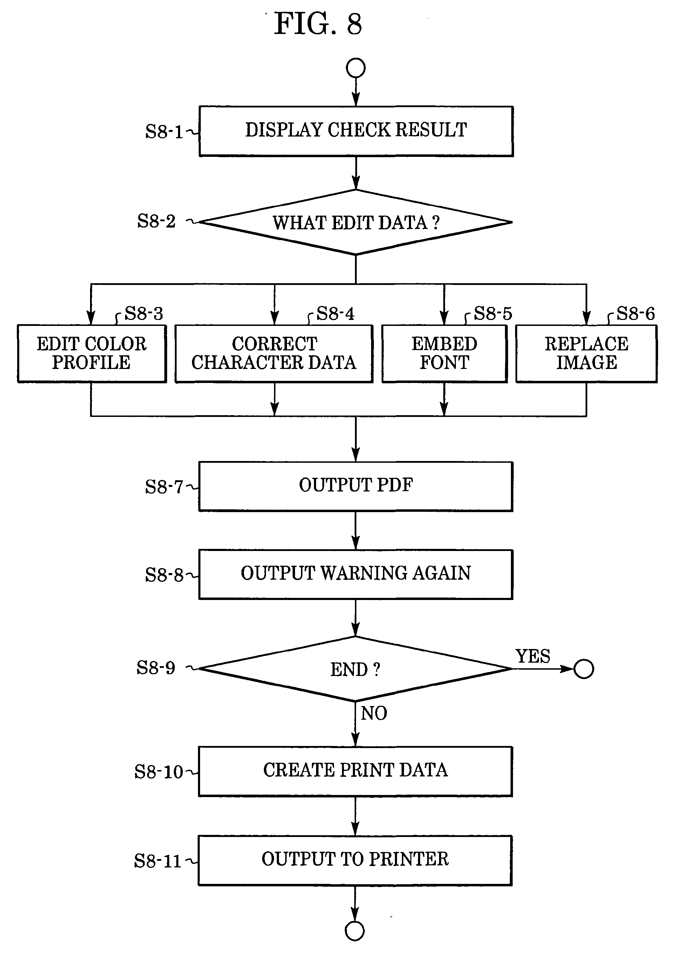

A DKC 108 is a disk controller, and performs the access control for an external storage device 109. The external storage device 109 is a floppy disk device, a hard disk unit (HD), a CD-ROM, or the like. The hard disk unit stores a character-expansion processing program which reads character-pattern data (font data) and font data, and converts it into bit-map data, a graphic-expansion processing program for processing graphic data, an image data processing program for processing image data, and the like. The application programs for performing the processing of Figs. 7 and 8 according to the embodiment of the present invention and related data are supplied from the external storage device are stored in the RAM 103, and then used for the execution and the processing target by the CPU 101.

An NTC 110 is a network controller, and controls the operation of an NT (network unit) 111. A system bus 112 performs data transfer among the above-described components.

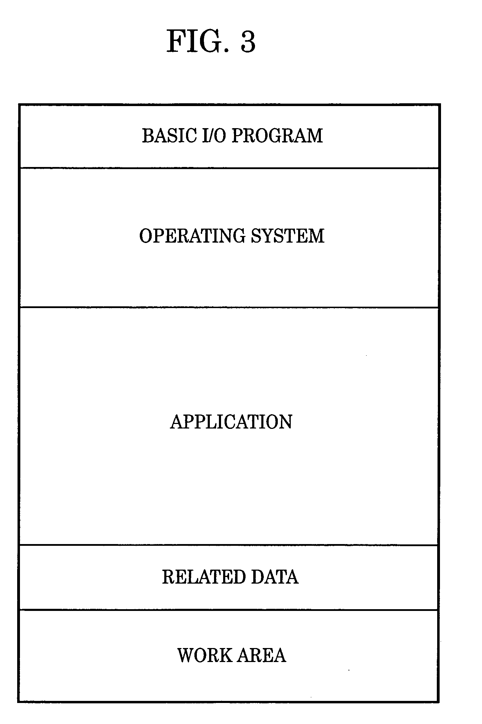

Fig. 3 is a diagram illustrating a memory map of the RAM 103 used for processing the steps of Figs. 7 and 8 according to an embodiment of the present invention. A basic I/O program is read into the RAM 103 by the system startup program in the ROM 102. The application programs and the related data are once installed into the hard disk unit from the external storage device 109. When power is turned on in that state, the programs and the data are loaded into the RAM 103' from the hard disk unit, and becomes possible to be executed. In this regard, the programs and the data can be loaded into the RAM 103 directly from the external storage device and executed without installing into the hard disk unit. In this regard, in the file server FS, a printer-information table described below is formed in the area of the related data.

### (Printer Configuration)

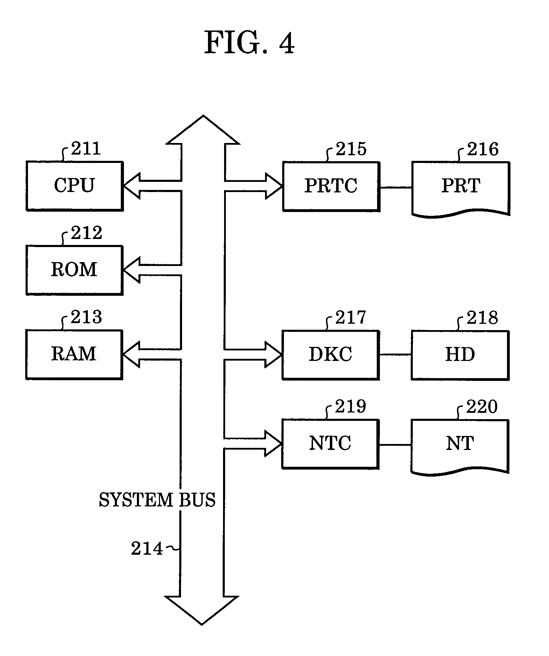

Fig. 4 is a block diagram illustrating a schematic configuration of a printer A. In this regard, the printer A may be a printer of any type, such as a laser-beam printer, an ink jet printer, or a thermal-transfer printer, etc. Any type of recording method may be applicable.

As shown in Fig. 4, the printer A has a CPU 211, a ROM 212, a RAM 213, a system bus 214, a printer controller (PRTC) 215, a printer engine (PRT) 216, a disk controller (DKC) 217, a hard disk unit (HD) 218, a network controller (NTC) 219, and a network unit (NT) 220. In this regard, the DKC 217, and the HD 218 may not be provided depending on the type of the printer.

The CPU 211 is a central processing unit for controlling the entire printer, and executes various processing necessary for printing in accordance with the program stored in the ROM 212 using the RAM 213 as a work area, etc. The system bus 214 becomes a path for sending and receiving data and control signals between the components described above. In this regard, the ROM 212 stores character-pattern data (font data), etc. The document data, image data, or font data, requested from the Web server WS are sometimes downloaded to the RAM 213 or HD 218 from the Web server WS to be stored there. Also, the output data expanded into images is sometimes downloaded to the RAM 213 or HD 218 from the print server PS.

The CPU 211 generates character-pattern data and image data (bit-map data) from the document data, image data, or font data supplied from the Web server WS, or the print server PS in accordance with the program in the ROM 212, and expands it in the print buffer of the printer controller 215. The printer controller 215 outputs the print control signal generated based on the bit-map data to the printer engine 216.

The network control 219 controls the network unit (NT) 220 when transmitting and receiving data with the client personal computers X and Y, the file server FS, and the print server PS through the network N.

### (RIP Configuration)

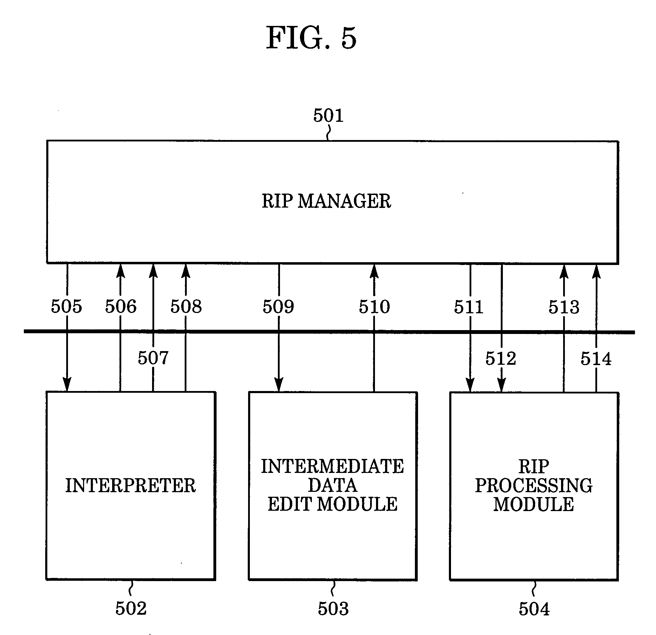

Next, a description of the configuration of the RIP (raster image processor) module of Fig. 5 is provided. The RIP converts the input PDL (page description language) data into, for example, a first intermediate language format (intermediate data 1) called a display list. This display list is converted into a second intermediate language format (intermediate data 2), and is further expanded to bit-map data or GDI (graphic device interface) format data. That is, when document is printed by the printer, the document data is processed by the RIP to convert it into standard-format data such as bit-map data, GDI, or the like, and is printed under the control of the operating system. For example, the document data is converted into the GDI format data, which is typically provided with the Windows® operating system. Then the data can be printed out from the printer through the printer driver, etc. As shown in Fig. 5, the RIP has a RIP manager 501, an interpreter 502, an intermediate-data edit module 503, and an RIP processing module 504.

In Fig. 5, the RIP manager 501 receives a PDF document, a PS document, and print instructions, and manages expansion processing of the document based on the print instructions. For example, it is assumed that the print instructions specify a 2-in-1 (2-up) format for printing a PDF file. The 2-in-1 or 2-up format is an output format when two pages are individually reduced to be contained in one sheet of the original page size. At this time, the RIP manager 501, first, performs analysis and conversion processing on all the pages of all the documents by the interpreter 502 to generate the intermediate data 1. Then the RIP manager 501 reduces the intermediate data 1 to one half using the intermediate-data edit module 503 to generate new intermediate data 1. The intermediate data 1 for two pages are pasted onto both the right side and the left side in one page to generate one page of new 2-in-1 data. Thus, all the data is generated into the intermediate data 1, which is edited in a 2-in-1 layout, namely, in the first intermediate language format. After the 2-in-1 edited intermediate data is generated for all the data, next, the RIP processing module 504 is started, the intermediate data 1 is converted into the intermediate data 2, and furthermore, processing for converting to an image or GDI-format data is performed. The RIP manager 501 manages a series of this processing.

The interpreter processing 502 interprets the contents of the PDS and PS document data, and performs the generation processing of the intermediate data 1, and the generation processing of the intermediate data 2 based on the intermediate data 1.

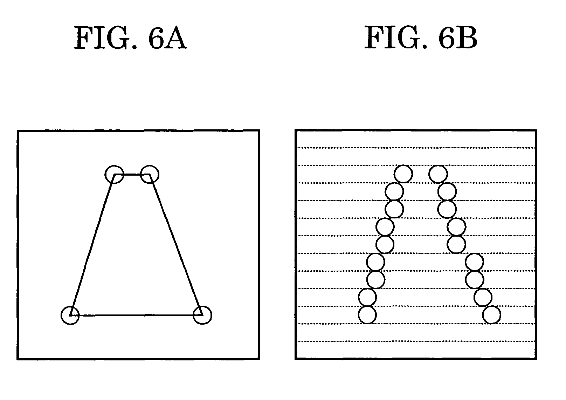

Here, a description of differences between the intermediate data 1 and the intermediate data 2 is provided. As shown in Fig. 6A, the intermediate data 1 is vector-level data (for example, contour data) if it is graphics, and it maintains the character code and the font size of the character. This data format is suitable for edit processing such as enlargement, reduction, etc. As shown in Fig. 6B, the intermediate data 2 is information on start and end points of each scanning line, and the data process level is close to a drawing level (the process level of the data which has been converted into bit-map data). For a font, the data becomes expanded bit-map image data. Thus the intermediate data 2 does not have flexibility compared with the intermediate data 1, and its data format is not suited for enlargement, reduction, etc. However, the data format of the intermediate data 2 is close to the drawing level, and thus RIP processing, which expands the intermediate data 2 to bit-map data in a raster format, can be executed at high speed.

The data as described below is exchanged at the interface between the RIP manager 501 and the interpreter 502. Input data 505 from the RIP manager 501 to the interpreter 502 is a document in a format, such as PDF, PS, SVG, etc. For the input data 505, the interpreter 502 sometimes returns the intermediate data in the first format (intermediate data 1) 506, and at other times returns the intermediate data in the second format (intermediate data 2) 507. The difference between returning the intermediate data 1 and returning the intermediate data 2 is as follows. When it is necessary to perform editing, such as enlargement, reduction, etc. at the intermediate data level, for example, an N-up (a layout of disposing N pages of application on one side of sheet), a booklet (a layout of disposing pages in a book-binding format by piling up the specified number of output sheets and folding into two), etc., the intermediate data 1 is returned. When the processing such as an N-up, etc. is not performed, and there is no need to change a scale, the intermediate data 2, with which the subsequent RIP processing is fast, is returned. The determination to change scale and specify output format may be made by the RIP manager 501. Alternatively, the RIP manager 501 may pass a print-format parameter to the interpreter 502, and cause the interpreter 502 to determine the necessity of changing a scale.

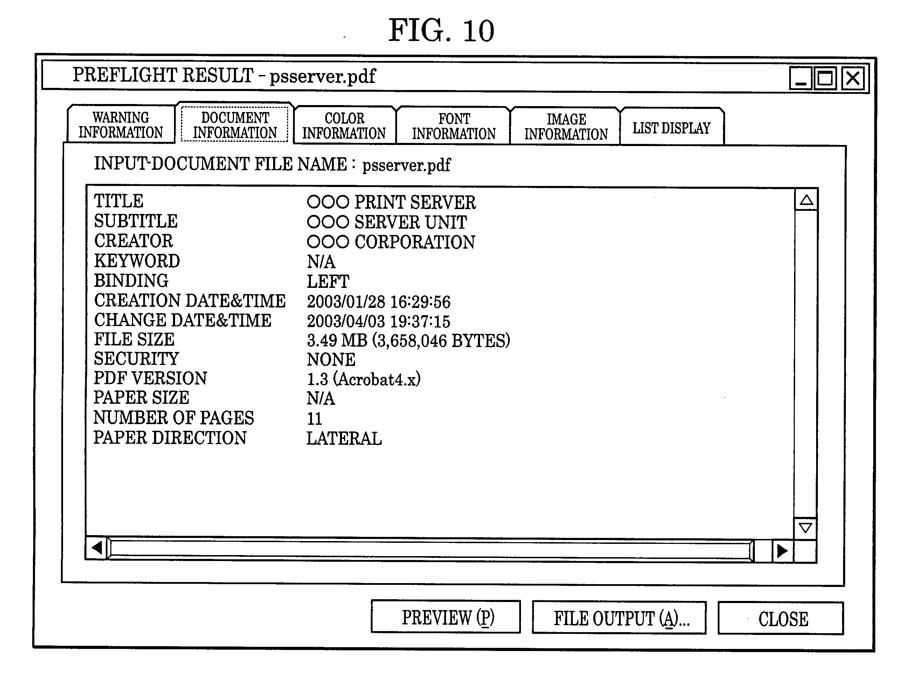

Also, during the preflight check, the interpreter 502 processes and returns a font list, a image-data resolution, or a color profile that are used in the check target document as a preflight check result 508. The font and the resolution used in the document can be obtained by analyzing the document. As shown in Fig. 10 below, the preflight check result includes document information, color information, font information, and image information. Also, warning (display) information is provided for viewing by an operator. The document information includes various information on the check-target document, for example, a title, a subtitle, a creator, a keyword, a binding way, a creation date&time, a change date&time, a file size, security, if the document is PDF, a version thereof (the version thereof in another format), a page size, a paper direction, etc. The color information includes various information used in the check-target document, for example, a color profile name, a description (rendering intent) on the profile specified in advance by the operator, etc., and a color space. The font information includes various information used in the check-target document, for example, a font name, a type, etc., whether there is embedding or not, the page number used, etc. The image information includes an image file name embedded in the check-target document, a color space of the image, a resolution, etc.

The preflight check and the intermediate data generation processing at print time are executed by the interpreter 502, and thus the interpreter 502 can simultaneously return the intermediate data 506 in the first format and the preflight check result 508. In the same manner, the interpreter 502 can simultaneously return the intermediate data 507 in the second format and the preflight check result 508.

At the interface between the RIP manager 501 and the intermediate-data edit module 503, the data as described below is exchanged. The intermediate-data edit module 503 receives the intermediate data 1 as edit input 509, and performs editing such as enlargement, reduction, etc., and data shaping such as trappings, etc., and then returns edit output 510 in the intermediate data 1 format. That is, the intermediate-data edit module 503 performs various edit processing in the intermediate data 1 format.

At the interface between the RIP manager 501 and the RIP processing module 504, the data as described below is exchanged. The RIP processing module 504 sometimes receives input of the intermediate data in the first format as RIP input 511, and at other times receives input of the intermediate data in the second format as RIP input 512. When receiving the intermediate data 2, the RIP processing module 504 directly receives the intermediate data in the second format output from the interpreter 502 without going through the intermediate data edit module 503. That is, the edit processing such as an N-up, etc. is not performed.
Then the RIP processing module 504 performs data expansion processing, and outputs image data as RIP output 513, or converts the data into a GDI format in order to satisfy the drawing in Windows as RIP output 514, and outputs it.

### (Preflight Check)

Next, a detailed description of the flowchart of Fig. 7 illustrating the preflight check process is provided in accordance with an embodiment of the present invention. In the present embodiment, the preflight check is exemplarily executed by a RIP system (exemplarily interpreter 502). The preflight check is executed when the RIP manager 501 passes an instruction and document data 505 to the interpreter 502. The preflight check may be performed together with generation of the intermediate data. In that case, the RIP manager 501 passes, an intermediate data generation instruction and the document data to the interpreter. The generated intermediate data may be in the first format or other formats consistent with the scope of the present invention. For example, the intermediate data may be generated in the second format.

In step 7-1, it is determined whether the platform environment has recently changed. If the operator has changed the PC environment by installing a new font, color profile, etc., the platform environment check in step 7-2 needs to be performed. Otherwise, the platform environment check need not be performed. Accordingly, in step 7-1, a button (not shown) for checking the PC environment in the UI (user interface) is provided. If the operator selects this button, the processing goes to step 7-2, otherwise the processing goes to step 7-3. In this regard, the determination criteria in step 7-1 is not limited to the operator's input, and, for example, step 7-2 may be unconditionally executed. Alternatively, when the computer environment has been changed, a flag, etc. for indicating the action may be set. By referring to such a flag, processing then proceeds to step 7-2, after which the flag is reset by the operator.

At step 7-2, the PC environment is checked by the operator. The type of the font data and the type of the color profile, for example, may be checked. For each font and color profile, the names of the associate data files specified in the PC as available resources are checked. The data files are then written and stored in a predetermined file called a PC environment file. For example, on the Windows® operating system, the available fonts and color profiles are obtained and stored in registry files, which is a database resources provided on the computer. Since other operating systems generally include files and database for managing such resources, it is possible to check the fonts and profiles on the other operation systems in the same manner. An example has been given of the color profiles and fonts. However, the PC check may include checking setting items if they are setting items are provided in the personal computer.

In step 7-3, the user selects a driver. Base on the user's driver selection, it is determined which printer is used to output the document data corresponding to the preflight check.

In step 7-4, the printer driver settings are checked. For example, it is determined whether the printer driver specifies to "Use the PC font" or to "Use the printer font". The settings have been stored, for example, in a settings database under control of the printer driver. Reference can then be made to the database to determine the settings.

In step 7-5, it is determined whether the printer check should be performed. If the print driver setting in step 7-4 is "Use the PC font", then the printer check need not be performed and processing proceeds to step 7-7. If the print driver setting of step 7-4 is "Use the printer font", then the printer check is performed and processing proceeds to step 7-6. In step 7-6, the printer environment is then checked although this step may be skipped by the operator if the printer environment has not changed.

Specifically, in step 7-6, the font environment of the printer is checked to determine the fonts installed on the printer. Here, the client PC X or Y inquires of the printer about the installed font information, and receives a font list installed on the printer. Then the information is written and stored in a predetermined file called a printer environment file.

In step 7-7, the target document is read in preparation for analysis in step 7-8. Examples of the target document are a PDF file, a PS file, and an SVG file.

In step 7-8, the document data read in step 7-7 is analyzed. The analysis content is similar to that of the interpreter 502 in Fig. 5, and thus the description thereof is omitted. In the analysis processing, information such as the types of the font data (font names) used in the document, whether each font is embedded in the document, the type of the color profile (profile name), whether the color profile is embedded in the document, etc. is extracted from the document. Furthermore, information regarding image data such as image resolution, the name and so on are read and stored in a temporary file called the preflight-check result file, which is temporarily created during the preflight check.

In step 7-9, the document is saved in the intermediate data 1 format, i.e., as a printable format based on the analysis of the document data. This intermediate data format is as described in Fig. 5. The advantage of this format is that the document can be subsequently edited.

In step 7-10, the type of data that was analyzed and stored in step 7-8 is determined. If the data is font-related data, the processing goes to step 7-11. If the data is color-related data, the processing goes to step 7-13. If the data is image-related data, the processing goes to step 7-15. This determination can be made by creating a record for each data type at the time of saving the file, and adding an identification indicating the data type.

In step 7-11, a more detailed check of the fonts is performed. If the driver setting is "Use the PC font" as determined in step 7-4, the font information is read from the PC environment file (stored in step 7-2) into a memory as font environment information. If the driver setting is "Use the printer font", the font information is read from the printer environment file (stored in step 7-6) into a memory as font environment information. Then the font data portion (font information) of the document is read from the preflight check result file (stored in step 7-8) as the font information of the document. The font information is the typeface name, whether the typeface font is embedded, etc. As herein defined, embedding means that font data is included in the document. If embedded, the specified font at document creation time can be used without inquiring the environment.

In step 7-12, matching is performed between the font environment information of the PC and the printer, read in step 7-11, and the font information of the document. If the font is embedded in the document, the document is output using the embedded font, and thus printing occurs even if the font is not included in the font environment information. However, when the font is not embedded, and the font is not included in the font environment information, the font is replaced with another font. Accordingly, a replacement table stored in the printer driver is referenced, and the data indicating the current and replaced fonts in the document is output. If an alternative font is not specified in the replacement table, data output is used to direct the operator to either install or specify a replace font. The output data is then stored as a font-information matching file. The replacement table specifies replacement fonts when a font used in the document is not implemented in the printer or PC. As described above, if the resources (in this example, fonts) used in the document are not embedded in the document, and also are not provided in the print environment, the operator is informed that the resource is unavailable.

In step 7-13, a more detailed color check is performed. The color related information included in the printer environment file stored in step 7-6 includes information on whether the printer is a color printer and if so whether CMYK data can be handled, etc. Also, the color related information included in the PC environment file stored in step 7-2 includes the name of the color profile in the PC environment. In step 7-13, such information is read into memory as color environment information. Then the color-related data portion is read from the preflight check result file. The color-related data portion may include a source color profile name, and whether the color profile data is embedded.

In step 7-14, matching is performed between the color environment information (read in step 7-13) and the document's color information. First, if the output device is a monochrome printer, for example, the operator is informed that color cannot be output. If the printer cannot handle CYMK data, the indication that the data is to be converted into RGB output is output. Also, if the input profile is not embedded, checking is performed regardless of whether the profile name included in the document's color information is provided in the profile list stored by the environment check on the PC (that is to say, whether or not included in the color environment information). If not provided, the check result informing that the profile is not provided is output. This output is stored as color information matching file temporarily created during the preflight check.

In step 7-15, a detailed check on image information is performed. The image related information in the printer environment file (step 7-6) includes resolution information of the printer. In step 7-15, such information is read into the memory as image environment information. Then the image-related data portion included in the preflight check result file on the contents of the document stored in step 7-8 is read as the document's image information, which includes the resolution of each image included in the document.

In step 7-16, matching is performed between the image environment information (step 7-15) and the document's image information. Here, if the resolution of each image is about one fifth or less than the resolution of the output printer, an error is output. Specifically, when the printer resolution is 600 DPI and the image resolution is 120 DPI or less, an output is generated indicating that the particular image is too small. This check output is temporarily stored as an image information matching file. As described above, even if the resources (in this example, a print engine) to be used for the document are provided in a print environment, when the attributes (in this example, the resolution) on the resources do not match the requirement, the operator is informed that resources are unavailable.

In step 7-17, it is determined the result file of the preflight check has been completely scanned. If not completed, the processing goes back to step 7-10. If completed, the processing goes to step 7-18.

In step 7-18, the contents of the preflight check result file and output results of steps 7-12, 7-14, and 7-16, are displayed on the CRT 107 for operator viewing.

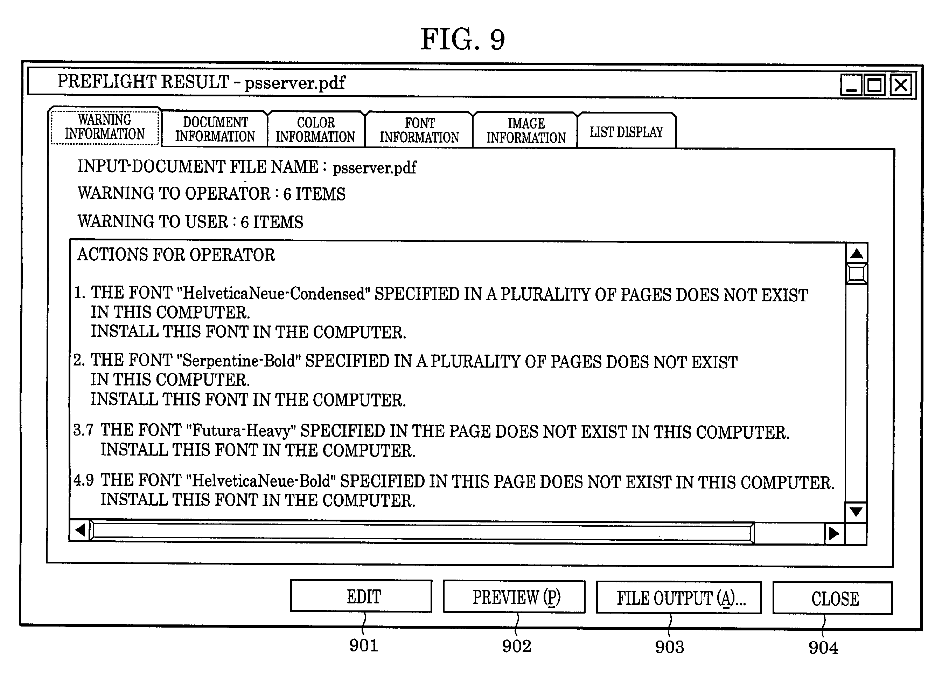

Figs. 9 to 13 illustrates an example of the user interface illustrating the preflight check result displayed in steps 7-18. Fig. 9 is an example of the screen for displaying the warning information, which has gathered the output results output in steps 7-12, 7-14, and 7-16. Fig. 9 is an example of a screen shot displaying information that alternative fonts are unspecified for four types of fonts. Fig. 9 is displayed by selecting the "Warning information" tab in the user information screen. In Fig. 9, a message is displayed stating that the fonts are not provided in the computer, and that the operator should either install those fonts in the computer or specifying alternative fonts. In response, the operator can select the "Edit" button 901 to either edit the document file or to edit the generated intermediate data and replace the fonts. Alternatively, the operator can install the fonts in the computer using functions provided by the operation system, etc., or the operator can specify the alternative fonts. The operator can also select a preview button 902 to display the preview image of the document to be output, or select a file output button 903 to selectively save from the preflight check result file generated during the preflight check to the font information matching file, the color information matching file, and the image information matching file. Of course, the structures of these temporary files are not limited to the examples shown in the embodiments, and may have any forms as long as the contents saved by those are maintained.

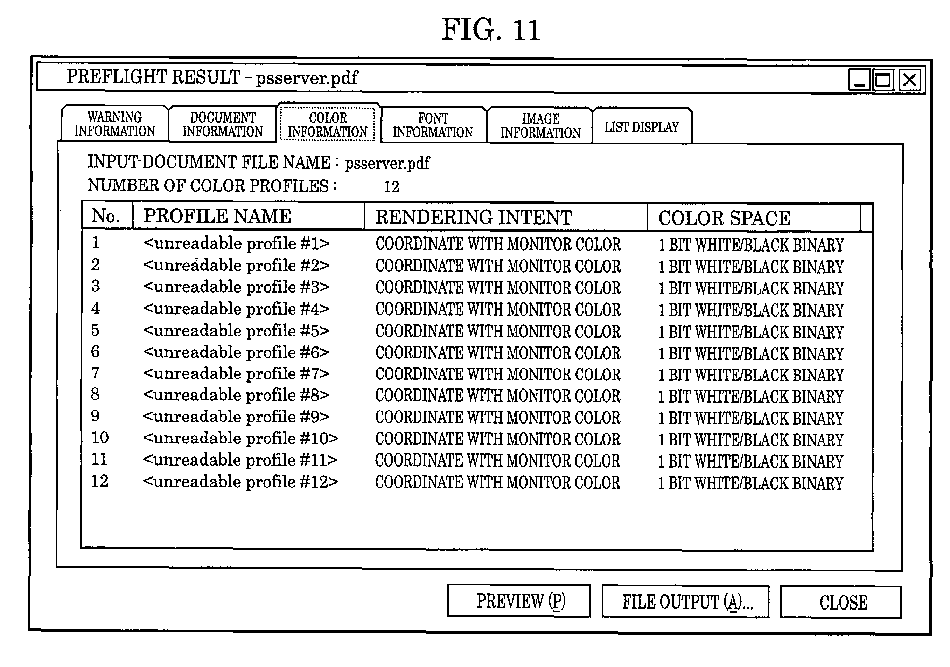

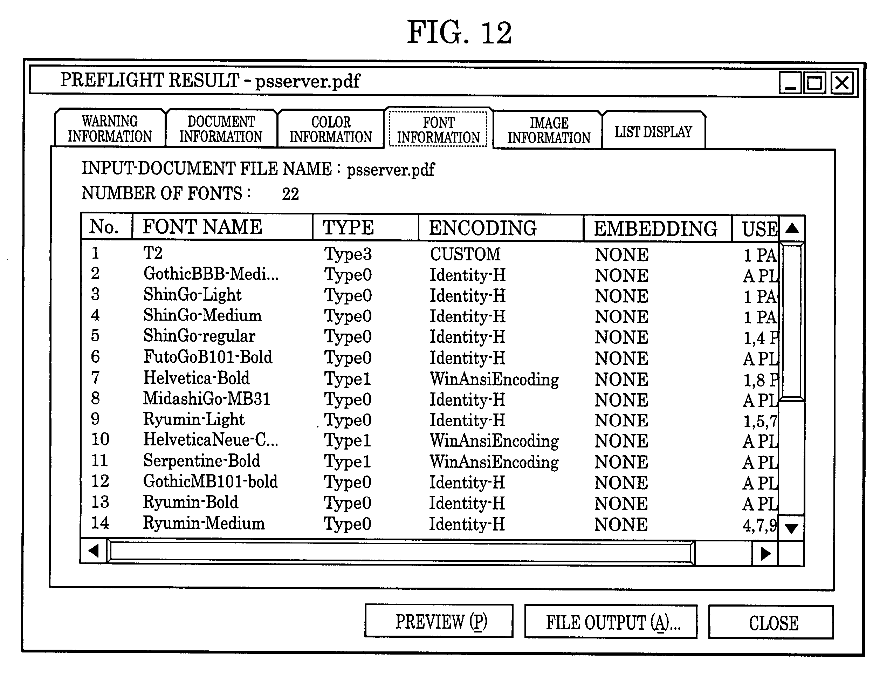

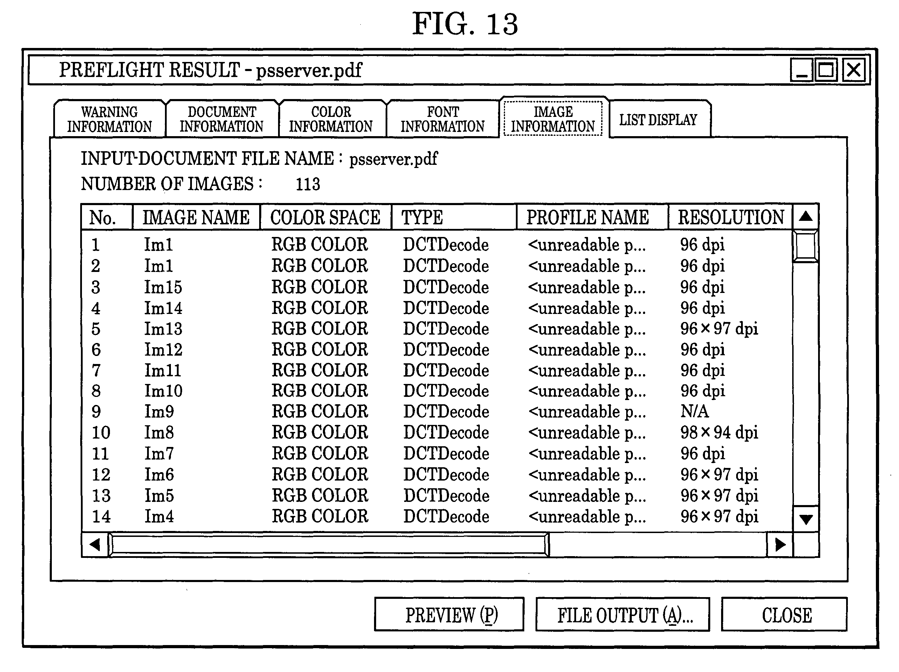

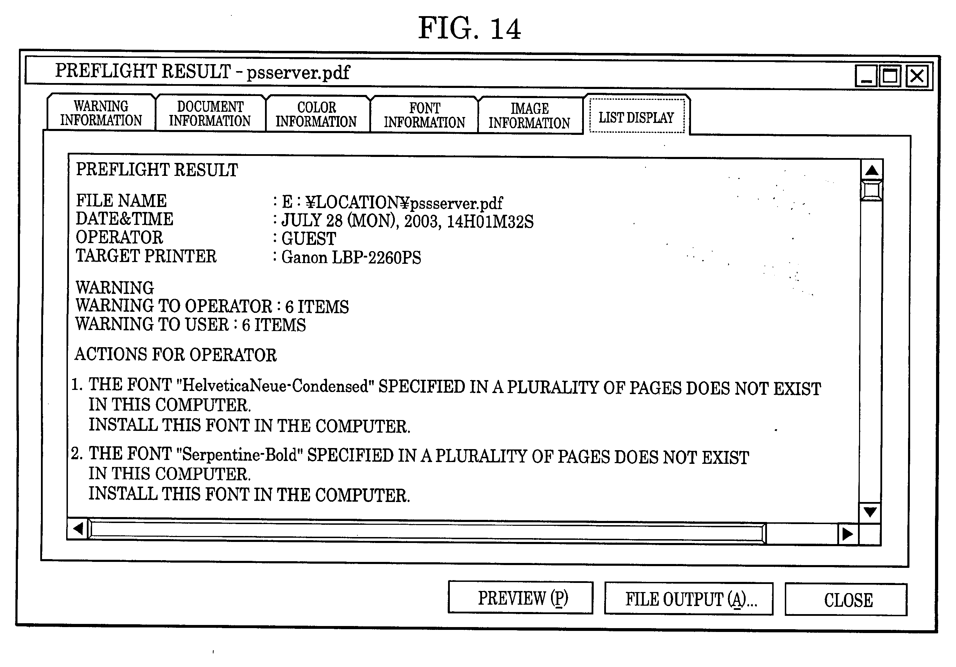

Fig. 10 is a screen shot displayed by selecting the "Document information" tab on the user information screen of Fig. 9. The document information such as a title, subtitle, etc. is displayed. Fig. 11 is displayed by selecting the "Color information" tab on the user information screen in Fig. 9. The names of the color profiles used in the document are displayed. Fig. 12 is displayed by selecting the "Font information" tab in the user information screen in Fig. 9. The names of the fonts used in the document and whether the fonts are embedded are displayed. Fig. 13 is displayed by selecting the "Image information" tab on the user information screen in Fig. 9. The names of the images used in the document and the resolution thereof are displayed. Fig. 14 is displayed by selecting the "List display" tab on the user information screen in Fig. 9. The document information, the color information, the font information, and the image information are displayed all together.

### (Edit processing steps)

Next, a description of the flowchart of Fig. 8 illustrating the editing process after the preflight check is provided. Step 8-1 corresponds to step 7-18 described in Fig. 7, and performs the preview of the preflight check result.

Modification processing is performed based on operator determination. Here, the operator selects the edit button 901 on the screen in Fig. 9. so that in step 8-2, a determination is made of what data is the edit target. The edit target is the intermediate data generated from the document data of the check target. Then the target of the warning saved, in the steps in Fig. 7, can be edited as a font information matching file, a color information matching file, and an image information matching file. That is, fonts to be used in the document and the embedded fonts, the color profile, and the image data can be edited. In this regard, for the edit target, one of the items on warning (namely, one of the font, the color profile, and the image) selected from the user interface screen in Fig. 9 can be selected.

If the color profile is edited, the processing goes to step 8-3. If the character font data is modified, the processing goes to step 8-4. If the font data is edited, the processing goes to step 8-5. If the image data is replaced, processing goes to step 8-6. At this time, the data to be modified in steps 8-3 to 8-6 is based on the data in the intermediate data 1 format output in step 7-9 of the flowchart in Fig. 7, and the edit processing is performed.

In step 8-3, the color profile is edited. Here, if the color profile data to be the target in the document is provided in the PC, the processing, which embeds the color profile data used in the document into the data of the intermediate data 1 format, is performed.

Note that in step 8-3, the color profile name is included in the data saved in the intermediate data 1 format. Thus the operator can replace the existing color profile name, as output in the warning, by the available color profile name installed in the PC. Also, if the color profile possessed by the printer is used, the warning might be output regardless of the existence of the color profile to be used on the PC. In such a case, or the case where a necessary profile is copied to the PC by a removable medium, etc., the existent profiles on the PC can also be embedded in the intermediate data 1. Also, regardless of the warning, the color profile not embedded can also be embedded. In this case, if the color profile to be embedded is selected, the selected color profile is embedded in the document of the intermediate data format. Here, a plurality of data can be embedded together.

In step 8-4, character data is modified. This modifies the character if the operator finds an erroneous character such as an erroneous Kanji when checking an original document, while that character is not output as an error in the preflight check. The modification function of character deletion, addition, and replacement similar to a word processor. Here, a specific description will be given of the replacement function. If the font specified in the document is not provided in the output environment (a computer and a printer), the warning screen in Fig. 9 is displayed. If the edit button 901 in Fig. 9 is selected by the user, the screen stating "Do you replace 1. Helvetica Neue-Condensed by another typeface?", and a list of existent typefaces in the output environment, which can be selected (for example, 1. Arial, 2. Century, 3. Courier, 4. Dutch, 5. Swiss) are displayed. Then the processing for replacing the specified font (Helvetica Neue-Condensed) in the document, which is not provided in the output environment by the font (for example, 1. Arial) specified by the user form the available list of fonts, which are provided in the output environment.

In step 805, font data is embedded. Here, if the font data to be the target in the document is provided in the PC, the font data corresponding to the character codes used in the document is embedded in the intermediate data 1 format data. Also, when the font data to be the target in the document is not provided in the printer, but is provided in the PC, the font data corresponding to the character codes used in the document is embedded in the intermediate data 1 format data.

Note that in step 8-5, the font name is included in the data saved in the intermediate data 1 format. The font name can be replaced by the available font in the printer if the printer font is used, and by the available font installed in the PC if the PC font is used. Also, if the setting is to use the font possessed by the printer, a warning might be output regardless of existence of available font on the PC. In such a case, or when a necessary font is copied to the PC from a removable medium, etc., the existent font can be embedded on the PC into the intermediate data 1. Also, a font, which is not embedded, can be embedded regardless of the warning. In this case, if the font to be embedded is selected, the selected font is embedded in an intermediate-data format document. At this time, if there are pluralities of pieces of data to be embedded, it is also possible to embed them all together.

In step 8-6, image data is replaced. Here, if there is not only the image data having a low resolution, but also image data of the same picture having a high resolution, the replacement processing of the image data in the intermediate data 1 format is performed. If the operator selects each of the image data before and after replacement, the replacement is performed on the document data in the intermediate data format.

In step 8-7, the conversion from the intermediate data 1 to PDF data is performed. At this time, the edit processing performed from step 8-3 to step 8-6 is all reflected on the PDF data.

In step 8-8, the resolved errors in the edit processing in steps 8-3 to 8-6 are eliminated, and the remaining errors are displayed. Then the operator attaches the PDF document created in step 8-7 to an electronic mail, etc., sends it to the user (requester of the document print) in order to determine whether the print processing of the edited document is performed. The operator also asks for a reply.

In step 8-9, if a print instruction is received from the user as the reply, the processing goes to step 8-10, whereas if a suspend instruction is received from the user, processing is terminated.

In step 8-10, print data is created. Based on the intermediate data 1 edited in steps 8-3 to 8-6, conversion is performed into a language interpretable by the printer. For example, if the printer can interpret and execute the page description language, LISP, the conversion from the intermediate data 1 format to LISP commands is performed. Whereas, if the printer accepts only images, the conversion form the intermediate data 1 format to images is performed.

In step 8-11, the data converted in step 8-10 is passed to the printer, is output from the printer, and the processing is completed.

As described above, in the print system according to the present embodiment, document information such as data attributes, etc. is not only displayed to the operator, but is also matched with the print environment resources, such as resources available to the computer and the printer for printing the document. Accordingly, inconsistencies during the preflight check can be detected and reported to the operator. Such inconsistencies occur, for example, where a setting unconformable to the print environment is included in the document information. The preflight check can be performed without operator input. For example, when the operator has no knowledge of the print environment.

Another advantage of the present invention is that a document edit function is provided allowing embedding of resources used in the document into the document itself, in this manner, inconsistencies can be easily and quickly identified.

According to the present embodiment, matching between the document contents and the system environment of the print system (e.g. print settings at preflight check time) can be performed. Thus, operator error is either completely eliminated or reduced to a minimum. Thus, productivity of document printing is increased, and waste of the resources (i.e. reprinting same document) can be avoided.

Also, by providing a print system with an edit function after a preflight check, the operator can perform modification without requesting solutions from the user. Accordingly, increased productivity can be further obtained.

While the present invention has been described with reference to what are presently considered to be the preferred embodiments, it is to be understood that the invention is not limited to the disclosed embodiments. On the contrary, the invention is intended to cover various modifications and equivalent arrangements included within the spirit and scope of the appended claims. The scope of the following claims is to be accorded the broadest interpretation so as to encompass all such modifications and equivalent structures and functions.

## Claims

1. A document processing method comprising:
a first acquisition step, which acquires first resource information on resources to be used for a document;
a second acquisition step, which acquires second resource information on resources available for outputting the document; and
a matching step, which matches the first resource information with the second resource information, and outputs information on resources unavailable for outputting the document.

2. The document processing method according to Claim 1,
wherein the information on resources unavailable for outputting the document includes information on resources which is included in the first resource information and not included in the second resource information, or information on resources which is included in the second resource information but do not include attributes for outputting the document.

3. The document processing method according to Claim 1,
wherein the first acquisition step and the second acquisition step acquire information on at least one of a font, color profile, and an image resolution as information on resources, and
the information on resources unavailable for outputting the document includes information on at least one of a font, a color profile, and an image resolution.

4. The document processing method according to Claim 3,
wherein the first acquisition step acquires, as the first resource information, information on a font to be used for outputting the document as resource information on a font, which is either a font possessed by a document processing system or a font possessed by a printer connected to the document processing system.

5. The document processing method according to Claim 1,
further comprising an edit step for editing the document,
wherein the edit step is capable of embedding resources to be used for the document in the document, or perform an operation for replacing the resources.

6. The document processing method according to Claim 1,
further comprising a conversion step, which converts the document into a format for outputting from a printer.

7. A computer program comprising:
a first acquisition step which acquires first resource information on resources to be used for a document;,
a second acquisition step which acquires second resource information on resources available for outputting the document; and
a matching step which matches the first resource information with the second resource information, and outputs information on resources unavailable for outputting the document.

8. The computer program according to Claim 7,
wherein the information on resources unavailable for outputting the document includes at least either information on resources which is included in the first resource information and not included in the second resource information, or information on resources which is included in the second resource information, but do not include attributes for outputting the document.

9. The computer program according to Claim 7,
wherein the first acquisition step and the second acquisition step acquire information on at least one of a font, a color profile, and an image resolution as information on resources, and
the information on resources unavailable for outputting the document includes information on at least one of a font, a color profile, and an image resolution.

10. The computer program according to Claim 9,
wherein the first acquisition step acquires, as the first resource information, information on a font to be used for outputting the document as resource information on a font, which is either a font possessed by the computer or a font possessed by a printer connected to the computer.

11. The computer program according to Claim 7,
further comprising an edit step for causing a computer to edit the document,
wherein the edit step can embed resources to be used for the document in the document, or perform an operation for replacing the resources.

12. The computer program according to Claim 7,
further comprising a conversion step, which causes a computer to convert the document into a format for outputting from a printer.

13. A computer-readable recording medium for recording the computer program according to Claim 7.

14. A document processing system comprising:
a first acquisition module, which acquires first resource information on resources to be used for a document;
a second acquisition module, which acquires second resource information on resources available for outputting the document from a document processing system; and
a matching module, which matches the first resource information with the second resource information, and outputs information on resources unavailable for outputting the document.

15. The document processing system according to Claim 14,
further comprising a specification module for specifying an alternative font for a font, which is unavailable for outputting the document,
wherein the font is included in the resources.

16. The document processing system according to Claim 15,
further comprising a display module for displaying a list of alternative fonts in an output environment,
wherein the specification module specifies a font from a list of alternative fonts displayed in the display module.

17. The document processing system according to Claim 15,
wherein the matching module gives a warning such that a use place of the font, which is not provided in the output environment, can be identified.

18. The document processing method according to Claim 1,
further comprising a specification step for specifying an alternative font for a font, which is unavailable for outputting the document,
wherein the font is included in the resources.

19. The method of document processing according to Claim 18,
further comprising a display step for displaying a list of alternative fonts in an output environment,
wherein the specification step specifies a font from the list of alternative fonts displayed in the display step.

20. The method of document processing according to Claim 18,
wherein the matching step indicates that a use place of the font, which is not provided in the output environment, can be identified.

21. A method of document processing comprising the steps of:
determining whether a font specified in a document is provided within a printing environment;
if not provided, indicating that the font specified in the document is not provided in the printing environment;
displaying a list of alternate fonts in the printing environment; and
selecting, from the list of alternate fonts, an alternate font to replace the font that is not provided in the printing environment.
